# EUROPEAN PATENT SPECIFICATION

(11) **EP 3 892 067 B1**
(45) Date of publication and mention of the grant of the patent: **16.11.2022**
(21) Application number: 19805982.6
(22) Date of filing: 25.11.2019
(51) Int. Cl.: H05B 45/3578, H05B 45/54, H05B 47/24

(54) **RETROFIT LAMP, A LIGHTING SYSTEM USING THE SAME AND A PROTECTION METHOD**
NACHGERÜSTETE LAMPE, BELEUCHTUNGSSYSTEM MIT VERWENDUNG DAVON UND SCHUTZVORRICHTUNG
LAMPE DE RATTRAPAGE, SYSTÈME D'ÉCLAIRAGE L'UTILISANT ET PROCÉDÉ DE PROTECTION

(30) Priority: 04.12.2018 WO PCT/CN2018/119184; 22.02.2019 EP 19158707
(43) Date of publication of application: 13.10.2021
(73) Proprietor: Signify Holding B.V., 5656 AE Eindhoven (NL)
(72) Inventor: LIU, Yuanqiang, 5656 AE Eindhoven (NL); SUN, Shiguang, 5656 AE Eindhoven (NL); DUAN, Yunfei, 5656 AE Eindhoven (NL)
(74) Representative: Verweij, Petronella Daniëlle
(86) International application number: PCT/EP2019/082341
(87) International publication number: WO 2020/114811

(56) References cited:
- WO-A1-2015/014680
- US-A1- 2014 320 018
- US-A1- 2017 006 672

## Description

### FIELD OF THE INVENTION

This invention relates to retrofit lamps, in particular solid state lamps (such as LEDs) for use with AC fluorescent/discharge ballasts.

### BACKGROUND OF THE INVENTION

Tube lighting arrangements are commonly used to light industrial or domestic buildings. Typically, such tube lighting arrangements comprise fluorescent tubes comprising mercury, where current flowing through the fluorescent tube causes the tube to emit light.

Tube lighting arrangements typically comprise an electromagnetic (inductor-based) or electronic (semiconductor switch-based) ballast adapted to provide an alternating current to the fluorescent tube. The ballast regulates the current flowing through the fluorescent tube to ensure that a runaway current does not cause damage to the fluorescent lamp. In some other applications, high intensity discharge (HID) lamps, instead of tube lamps, are also driven by electromagnetic (inductor-based) or electronic (semiconductor switch-based) ballast.

Recently, it has been increasingly desirable to replace fluorescent tubes or HID lamps with an LED arrangement. This may be for reasons such as increased lifespan, greater efficiency and reduced used of potentially hazardous materials (such as mercury). Accordingly, there is a need for arrangements which may convert an output of the electronic ballast into a form suitable for the LED arrangement.

In the simplest case, an LED string can be connected to the ballast using a diode bridge for converting high frequency AC power to DC and a capacitor for smoothing out the ripple current. If the LED string voltage is chosen substantially close to the burning/discharging voltage of the fluorescent tube or the high bay lamp (which may be a high intensity discharge lamp), the LED string will receive a similar power and current as the fluorescent tube or the high bay lamp.

However, sometimes the LED lamp has a power rating substantially lower than that of a traditional ballast. Furthermore, a dimming function in the LED lamp is desired. Therefore, LED lamps for use as retrofit lamps need to be compatible with the ballast. It is known, such as in US2013/221867A1, to provide this compatibility using a shunt switch that bypasses the LED arrangement from the ballast. In order to make the ballast work smoothly, this shunt switch short circuits the output of the ballast. In every half cycle, the shunt switch functions to provide a short, for a certain time, to regulate the output current. By adjusting the LED voltage and duty cycle, the LED current can be controlled. This enables compatibility as well as enabling a dimming function.

However, safety is always a requirement in retrofitting traditional lamps with LED lamps. Fault may occur and protection mechanism must be provided. This invention is directed for example to a problem which may arise if the LED string fails such that it presents an open circuit. In such a case, an excessive voltage may be applied to the smoothing capacitor. This capacitor is typically an electrolytic capacitor, and the overvoltage condition may result in electrolytic liquid leakage, which may in turn give rise to a safety issue, such as a fire hazard. Other fault may also occur.

The conventional approach for addressing this problem is to use overvoltage protection circuitry in the driver. However, a delay in the implementation of the protection may still result in safety issues.

There remains a need for a protection system for protecting the lamp in the event of a fault event in the lamp, for example at the LED string caused by an open circuit LED failure.

US20140320018A1 discloses a DIAC component in series with the LED circuit. US20170006672A1 also discloses a TRIAC component in series with the rectifier and the LEDs. WO2015014680A1 discloses a DIAC component between two pins at one end of the tubular LED.

### SUMMARY OF THE INVENTION

It is a concept of the invention to detect a fault, which may be of different types, and deliberately to cause a power supply from a ballast to a retrofit lamp to become asymmetrical so as to force the ballast to which the lamp is connected to become excessive/saturated. The resulting excessive/saturation current is then used to trip a fuse of the lamp so that the lamp is totally cut off from the ballast. With no input power from the ballast, a fault protection such as overvoltage protection is implemented before a dangerous situation can arise in the lamp. The invention is particularly of interest for tolerating open circuit failure of a lighting load. Here the term excessive does not mean the ballast is overloading and output a current that exceeds its limit, but means it is higher than the LED lamps needs, and most preferably, sufficient to trip the fuse.

The invention is defined by the claims.

According to examples in accordance with an aspect of the invention, there is provided a retrofit lamp for use with a ballast of a discharge lighting device, comprising:
a pair of input terminals adapted to connect to said ballast to receive AC power from the ballast;
an output stage adapted to be connected to a lighting load and power the lighting load from the AC power;
a fault detection circuit to detect a fault,
wherein the retrofit lamp further comprises:
   a fuse in series with one of the input terminals; and
   a protection circuit, adapted to be activated by the fault detection circuit and to control an asymmetrical conduction scheme between the pair of input terminals differently in the opposing phases of the AC power, in order to generate an asymmetrical current in opposing phases thereby a DC component in the AC power from the ballast when connected to the input terminals thereby making the ballast output an excessive ballast current through the fuse to activate and cut off the fuse.

This lamp design deliberately makes use of an asymmetrical conduction scheme between the input terminals, to force the current drawn to increase (in magnitude), until a point where a fuse is tripped. The asymmetry is for example introduced by implementing shorting only for one phase of the AC input. The tripping of a fuse provides full isolation of the lighting load from the ballast and thereby provides a safe protection function, for both the lighting load and the ballast.

The lamp preferably further comprises the lighting load to be driven by said ballast. The fault detection circuit is for example adapted to detect an overvoltage at the output stage as the fault, and the protection circuit is adapted to generate the DC component in the AC power from the ballast to make the ballast saturate to output a saturated ballast current as the excessive ballast current to activate and cut off the fuse. The saturation results in a large current flow thereby to blow the fuse, otherwise the ballast output would ramp up the voltage across a buffer capacitor in parallel with the lighting load.

The protection circuit is for example adapted to short circuit the pair of input terminals in only one of the opposing phases of the AC power, while to decouple the pair of input terminals from short circuiting in the other one of the opposing phases. Said decouple means the pair of input terminals is not short circuited, but is still connected to the downstream stage/output stage/LEDs. Thus the impedance are different in the opposing phases and so are the current in the opposing phases.

The retrofit lamp may further comprises a shunt switch in parallel with the lighting load and adapted to shunt said input terminals so as to tune the current through the lighting load. The invention is thus suitable for application to a shunt switch driver. This is a typical architecture of LED retrofit lamp for discharge ballast, and the shunt switch can further achieve a dimming function, as is already known.

The lamp preferably comprises a full rectifier connected to the pair of input terminals, comprising a first branch for conducting current during a positive phase of the AC power and a second branch for conducting current during a negative phase of the AC power, and wherein the protection circuit is coupled to only one branch of the full rectifier, and the other branch is decoupled from the protection circuit. In this way only one of the two phases (i.e. positive or negative) of the AC input power is shorted by the protection circuit, thereby to introduce the desired asymmetry.

The full rectifier for example comprises a four-diode diode bridge, wherein the protection circuit comprises a shorting circuit in parallel with one of the diodes of the one branch of the four-diode diode bridge. Thus, only one of the four branches of a full bridge diode rectifier needs to have a protection circuit applied to implement a controllable shorting function.

Alternatively, the full rectifier may comprise a synchronous/active bridge wherein active switches in the bridge achieve the above-mentioned shunt function to tune the LED current. The same active switches are also adapted to form different impedances at opposing phases of the AC power in order to generate a DC component in the ballast output.

Note that PCT/EP2018/069902 (filed on 23 July 2018) discloses an opposite approach in which a shunt switch is controlled to remove a DC component that occurs due to an abnormal driving condition. But in the present application, DC component is deliberately made.

The protection circuit may comprise a DIAC (Diode for Alternating Current). The DIAC is triggered by a particular breakover voltage and then allows a large current to flow. This avoids the need for a separate control circuit, since the DIAC performs the fault protection, in particular based on voltage detection for providing overvoltage protection, by means of its breakover voltage and a shorting function by means of the current flowing while the DIAC remains in its conduction state. Thus, the DIAC may itself implement the fault detection circuit.

Since the DIAC is coupled only to one branch for one phase and the other branch for the opposing phase is implemented without a shorting function, the current through the one branch is large while the current through the other branch is small due to the existing output stage buffer capacitor. Thus, the current is asymmetrical and a DC component is formed.

An EM ballast has a large inductance. When the current is symmetrical, the positive and negative current magnetize and demagnetize the inductance so that it does not saturate. However, when the current is asymmetrical, the small current is not enough to demagnetize the inductance, and the next large current will magnetize the inductance more, until saturation. After saturation, the inductance is no longer able to limit the input current so that the ballast outputs a large current to blow the fuse.

The protection circuit may instead comprise a silicon controlled rectifier in series with a diode. The silicon controlled rectifier has a gate terminal which may be controlled by the fault detection circuit. Thus, in this case, the fault detection circuit is coupled to the output stage and separate to the protection circuit.

The retrofit lamp preferably further comprising a buffer capacitor as the output stage in parallel with the lighting load, and the fuse is adapted to be cut off thereby protecting the buffer capacitor.

As explained above, the fuse is adapted to be activated upon a saturation current from the ballast caused by the protection circuit. The presence of the saturation current is indicative of the shorting function implemented by the protection circuit. The fuse then provides overall circuit protection before damage to the buffer capacitor. The rating of the fuse is for example in the range 1A to 10A.

The fault detection circuit is for example adapted to activate the protection circuit when an output voltage is higher than the operating voltage of the lighting load by a predetermined margin, wherein the margin is at least 30%. Thus, the protection is only initiated when the operating voltage exceeds allowable levels, and thus does not take effect during normal operation of the circuit. This voltage increase is caused by an open circuit at the lighting load, which allows the buffer capacitor to ramp up its stored voltage.

The lamp is for example for use with an electromagnetic ballast for high intensity discharge lamps. The lighting load preferably comprises an LED load.

The invention also provides a lighting system comprising:
an electromagnetic ballast of a discharge lighting device; and
a retrofit lamp as defined above connected to the ballast.

The invention also provides an overvoltage protection method for protecting a retrofit lamp when connected to a ballast of a discharge lighting device, the method comprising:
receiving AC power from the ballast to input terminals of the retrofit lamp;
detecting a fault, for example based on detecting an output voltage provided to the lighting load;
activating a protection circuit when the fault is detected, for example when the output voltage reaches a threshold;
using the protection circuit to control an asymmetrical conduction scheme between the pair input terminals differently in the opposing phases of the AC power, for example by performing shorting only in one of the opposing phases of the AC power, thereby to generate an asymmetrical current in opposing phases thereby a DC component in the AC power from the ballast when connected to the input terminals, to make the ballast saturate; and
activating a fuse when the saturation current is received from the ballast.

These and other aspects of the invention will be apparent from and elucidated with reference to the embodiment(s) described hereinafter.

### BRIEF DESCRIPTION OF THE DRAWINGS

Examples of the invention will now be described in detail with reference to the accompanying drawings, in which:
Fig. 1 shows a known LED lamp connected to a ballast;
Fig. 2 shows the waveforms in the circuit of Fig. 1 during normal operation;
Fig. 3 shows the effect of an interruption to one half cycle of the mains input;
Fig. 4 shows a first example of a circuit for preventing voltage overload;
Fig. 5 shows a second example of a circuit for preventing voltage overload;
Fig. 6 shows a third example of a circuit for preventing voltage overload;
Figure 7 shows a fourth example of a circuit for preventing voltage overload;
Fig. 8 shows a first example of a voltage detection circuit used within the circuit of Fig. 7;
Fig. 9 shows a second example of a voltage detection circuit used within the circuit of Fig. 7;
Fig. 10 shows a third example of a voltage detection circuit used within the circuit of Fig. 7;
Fig. 11 shows first current and voltage waveforms to explain the operation of the circuit;
Fig. 12 shows second current and voltage waveforms to explain the operation of the circuit; and
Fig. 13 shows an overvoltage protection method.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a retrofit lamp to be used with a discharge lamp ballast. The power supply from the ballast is deliberately caused to become asymmetrical when a fault condition is detected so as to force the ballast to deliver a saturated current output. This trips a fuse so that the lamp is isolated from the power source/ballast, and protection is implemented before a dangerous situation can arise in the lamp. The invention is particularly of interest for tolerating open circuit failure of the lighting load. The fault condition is preferably an overvoltage condition. However a fault may arise in other parts of the circuit. For example, in a multi-stage lamp with a switched mode conversion circuit, a fault may arise in a conversion circuit.

The invention may be applied to a driver topology in which a shunt switch is provided in parallel with a lighting load and is adapted to shunt input terminals of the lamp so as to tune the current through the lighting element. This current control is used to enable compatibility with different ballasts and to provide dimming control.

The shunt switch may either be provided between a rectifier bridge and the LED, or else it may be integrated with the rectifier bridge to replace a diode, which architecture is known as an active synchronous rectifier. The below description uses the former implementation to illustrate the principle of embodiments of the invention, while those skilled in the art understand that the concept of the invention may instead be applied to an active synchronous rectifier architecture.

The invention may also find application in driver architectures other than the shunt switch topology.

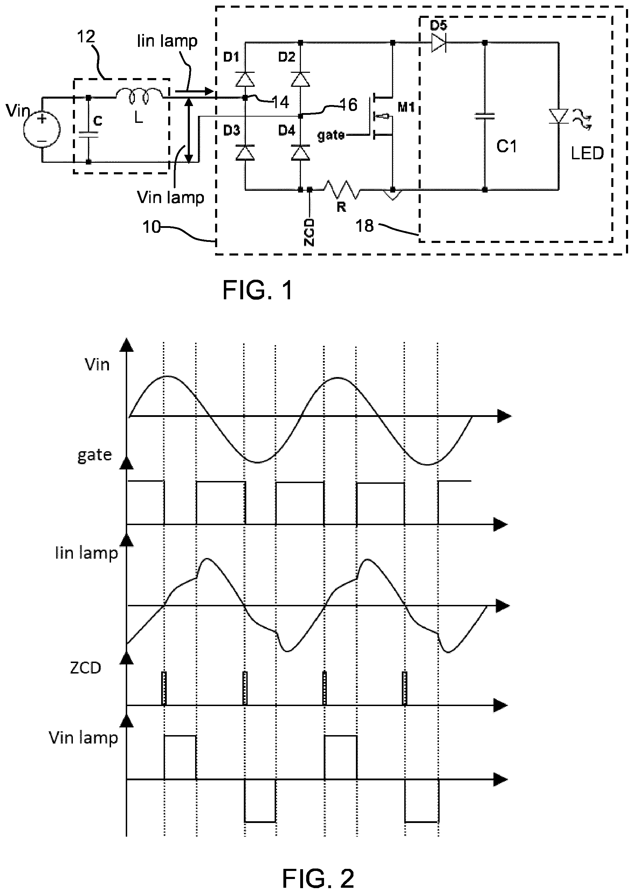

Figure 1 schematically shows a known LED lamp 10 which incorporates a shunt switch driver connected to an electromagnetic ballast 12. The ballast 12 receives a mains input Vin (which is AC) and is schematically represented as an inductor L and capacitor C. The ballast 12 is typically an electromagnetic ballast. It has a pair of output terminals which connect to input terminals 14, 16 of the lamp 10. There is a lamp input voltage "Vin lamp" across these terminals and input current "Iin lamp" into one terminal (and out of the other terminal). The input terminals connect to a full bridge rectifier comprising four diodes D1, D2, D3, D4. The rectified power signal provides current to a load 18 in the form of the LED arrangement ("LED") and a parallel buffer capacitor C1. There is a diode D5 between the one output terminal of the rectifier and one end of the parallel combination of the LED arrangement LED and the capacitor C1. This diode prevents discharge of the buffer capacitor C1 other than through the LED arrangement. In this example, there is a current sense resistor R between the other output terminal of the rectifier and the other end of the parallel combination of the LED arrangement LED and the capacitor C1.

In parallel with the load 18 is a shunt switch M1 controlled using pulse width modulation of a gate signal "gate".

In each half cycle of the input to the LED lamp 10, more specifically in each half cycle of the input current Iin lamp, the shunt switch M1 regulates the output current by shorting the load for a fraction of the cycle. The same shunt function is performed in opposite polarity half cycles to provide balanced control.

Figure 2 shows the waveforms in the circuit of Figure 1 during normal operation.

The top plot shows the mains input Vin.

The second plot shows the gate signal. When it is high, the MOSFET M1 is conducting, and the lamp voltage Vin lamp is shorted to zero as shown the bottom plot (in fact it still has the forward voltage of the rectifier bridge plus the conducting voltage of the MOSFET M1, but they are relatively so small thus considered as zero).

The third plot shows the current Iin lamp. It is not in phase with the input voltage as a result of the inductance L of the ballast. It also shows an initial increase in the magnitude of the slope when the shunt switch is closed. When the gate signal of the MOSFET M1 is high, the current is shunted back to the ballast without flowing into the LEDs; when the gate signal of the MOSFET is low, the current flows into the LEDs. In the example as shown, the non-shunting duration happens at the start of each half cycle (at zero crossing of the input current) and then the shunting duration follows. It can be understood that this order may be reversed: the shunting duration may happen at the zero crossing and then the non-shunting duration follows.

The fourth plot shows a zero crossing detector (ZCD) signal which detects crossing points of the lamp current Iin lamp. This is used to set the timing of the gate control signal and in this example it defines the end timing of the gate control signal. This signal may be obtained via the current sense resistor R or via voltage detection on one of the rectifier diodes.

The bottom plot shows the lamp voltage Vin lamp. When the gate of MOSFET M1 is low, meaning it is not conducting, the ballast enables a substantially constant voltage magnitude to be delivered to the lamp as a result of the constant forward voltage of LEDs, the smoothing function of the inductor and capacitor over the timescale of the AC period.

A known problem relating to the shunt switch topology is that if there is an abnormal supply event, for example a disturbance to the mains, instability and saturation can arise. For example, if there is a half cycle voltage interrupt, an electromagnetic ballast will become unbalanced and will saturate. This may cause an uncontrolled high current in the lamp and a circuit breaker function of the power supply/ballast may be triggered. This problem is a result of the use of the shunt switch topology since the shunt switch, when conducting, has a very low impedance and causes the high current. This high is current not a substantial problem for a conventional lamp since it always has a sufficiently high impedance.

Normally the ballast works with a balanced voltage over time so that the excitation current and demagnetizing current will always be equal. The interrupt to the supply disrupts this balance. Approaches for dealing with this possible current imbalance have been proposed.

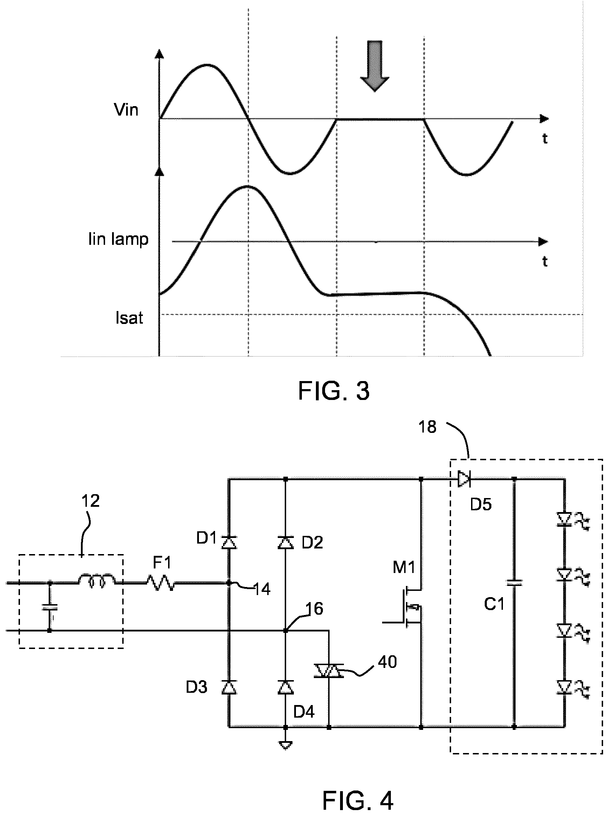

The effect of an interruption to one half cycle of the mains input Vin is shown in Figure 3. One positive half cycle is missing (alternatively one negative half cycle may be missing). The effect of this is that the input current "Iin lamp" is not driven positively by the ballast inductor but remains constant. In general, the current during a mains interrupt will remain constant or it may decrease slowly because of no voltage drop. Thus, the ballast creates two successive cycles of current reduction causing the current to decrease in negative (but increase in magnitude) beyond a saturation current Isat of the ballast.

This imbalance and saturation of the ballast will cause an uncontrolled high current in the lamp and the circuit breaker of the power supply (ballast) will trigger. Note this problem is caused by an abnormal mains input and in the prior art, it is considered to be the problem to be overcome. In PCT/EP2018/069902 (filed 23 July 2018), a solution is proposed.

The embodiments of this invention are based on the recognition that an imbalance may deliberately be generated by the lamp in the case of a fault, and the saturation is used to activate a mechanical (fuse-based) protection in the lamp. This may be used to implement a fault protection such as overvoltage protection. However, any identifiable fault for which protection is desired may be used to trigger the protection.

The invention creates this imbalance by controlling conduction between the pair of input terminals differently in the opposing phases of the AC power. In one implementation of the invention, the imbalance is created by shorting one the rectifier bridge diodes. The voltage drop on the ballast again will again become asymmetrical and have very high DC current component. Other approaches for creating the required imbalance may be used, for example by creating different impedances in the different paths, without necessarily being a full short.

By way of example, the discussion below is based on an overvoltage at the output as the fault to be detected and trigger the saturation current, but those skilled in the art may also understand that other faults, like overcurrent, overtemperature etc. can also be addressed by the embodiments of the invention.

Figure 4 shows a first example of a retrofit lamp to be used with a ballast of a discharge lighting device such as a fluorescent lighting tube or a high intensity discharge lamp such as mercury-vapor lamps and metal-halide lamps.

It is shown as a modification to Figure 1. As in Figure 1, there is a pair of input terminals 14, 16 adapted to connect to said ballast to receive AC power from the ballast 12, and an LED lighting load 18 is driven by the ballast. A shunt switch M1 is in parallel with the lighting load and is adapted to shunt the input terminals so as to tune the current through the lighting load.

The invention provides a fuse F1 in series with one of the input terminals 14,16. It enables the ballast to be isolated from the lighting load by an open circuit, thereby to prevent any (further) damage to the lighting load or other components such as the buffer capacitor C1. The rating of the fuse is for example in the range 1A to 10A. The rating is higher than a rated ballast current when it operates normally, but should cover the saturated ballast current when the DC component is deliberately generated.

The lamp further comprises a fault detection circuit, which in this example is implemented as a voltage detection circuit to detect an output voltage provided to the lighting load 18. In addition, there is a protection circuit, adapted to be activated by the fault detection circuit and to control conduction between the pair of input terminals differently in the opposing phases of the AC power, In this example, the conduction is controlled be different by providing a short circuit across the pair of input terminals only in one of the opposing phases of the AC power. The conduction can be made in the whole positive/negative phase, or only a portion of that phase, as along as the conduction pattern is different from the pattern in the opposing phase thereby the DC component can be generated at the ballast output.

The fuse is sensitive to the current flowing. In particular, the fuse is adapted to be activated (i.e. broken or tripped) upon a saturation current from the ballast caused by the protection circuit.

In the example of Figure 4, the voltage detection circuit and the protection circuit are both implemented by a DIAC 40, namely by a single component. The DIAC is a diode that conducts current only after its breakover voltage, VBO, has been reached. When overvoltage on the capacitor C1 occurs, the voltage on the DIAC 40 is the voltage on the capacitor C1 plus the sum of the forward voltages of diode D2 and D5. Thus the voltage DIAC 40 can detect an overvoltage fault of the capacitor C1. When breakdown of the DIAC 40 occurs, the diode 40 enters a region of negative dynamic resistance, leading to a decrease in the voltage drop across the diode and a sharp increase in current through the diode.

The diode remains in a conductive state until the current through it drops below a value characteristic for the device, called the holding current, IH. Below this value, the diode switches back to its high-resistance, non-conducting state. This behavior is bidirectional, but conduction in one direction only is used in this circuit.

The rectifier comprises a first branch D1, D4 for conducting current during a first phase of the AC power and a second branch D2, D3 for conducting current during a second, opposing, phase of the AC power. The protection circuit is coupled to only one branch of the full rectifier. In this example the DIAC is connected in parallel with diode D4 and hence coupled to branch D1, D4. If the DIAC 40 is made conductive when normally the diode D4 would be reverse biased and hence non-conductive, a shorting function is implemented. Generally, the DIAC functions as shorting circuit in parallel with one of the diodes of the four-diode diode bridge.

When the path of current flow is from the input 16, through diode D2, through the lighting load, through diode D3 to the input 14 (i.e. the negative phase), if the DIAC 40 conducts then this path is short circuited. The current path is then from the input 16, through DIAC 40, through diode D3 to the input 14.

If there is an open circuit in the LED string, then during this negative phase, the voltage at the output is present across diode D4 and the DIAC 40 (ignoring the voltage drop of D2 and D5). Thus, if there is an overvoltage event at the lighting load 18, the DIAC 40 will turn on during only the negative phase. There is nearly no impedance for the ballast, thus the ballast current is large. During the positive phase, the ballast output current still flows through the diode D1, to the diode D5, the capacitor C1 in parallel with the LEDs, and flows back via D4 in parallel with DIAC 40. The impedance is large, thus the current during the positive phase is small.

This short circuit causes asymmetry as explained above with reference to Figure 3, with the result that the ballast output current saturates. An asymmetrical current in inductive components such as the EM ballast, inductors, transformers, results in a trend towards saturation. The protection circuit is in this way adapted to generate a DC component in the AC power from the ballast to make the ballast saturate. The saturated current of the ballast blows the fuse. The protection mechanism can become effective in around 0.5~1.5 cycles of the AC input power, so that the electrolytic buffer capacitor will be protected. The protection function involves an open circuit mode for the ballast operating, instead of a short circuit mode for the ballast operating. If the ballast is instead placed in short circuit mode when the lamp has failed, the ballast will cause high power loss and also can cause overheating, and a potential fire hazard. In short, making ballast output open is better than making it short, from this perspective.

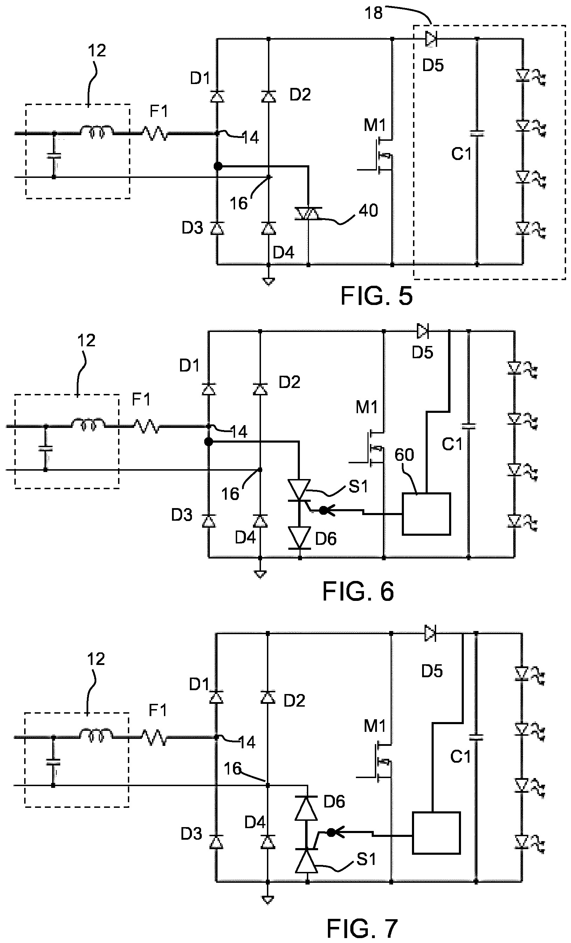

Figure 5 shows an alternative in which a DIAC is connected in parallel with diode D3. Thus, it shorts the opposite phase to the example of Figure 4. It shorts diode D3 thereby providing a short circuit path from input 14, through the DIAC 40, through diode D4 to the input 16.

Figure 6 shows an alternative example in which the protection circuit comprises a separate voltage detection circuit 60 and a silicon controlled rectifier S1 optionally in series with a diode D6 (wherein the D6 can be used for adjusting the trigger voltage of the overvoltage protection). The protection circuit is in parallel with the diode D3. It has the opposite polarity to D3 so that it conducts, when triggered, in the reverse bias current direction of D3.

Figure 7 shows an alternative example in which the protection circuit, of a silicon controlled rectifier (SCR) S1 in series with a diode D6, is in parallel with the diode D4.

The voltage detection circuit for example activates the protection circuit when the output voltage is higher than the operating voltage of the LED by a predetermined margin, wherein the margin is at least 30%.

This is achieved by suitable selection of the DIAC design, or by suitable injection of current into the SCR under the control of the voltage detection circuit 60.

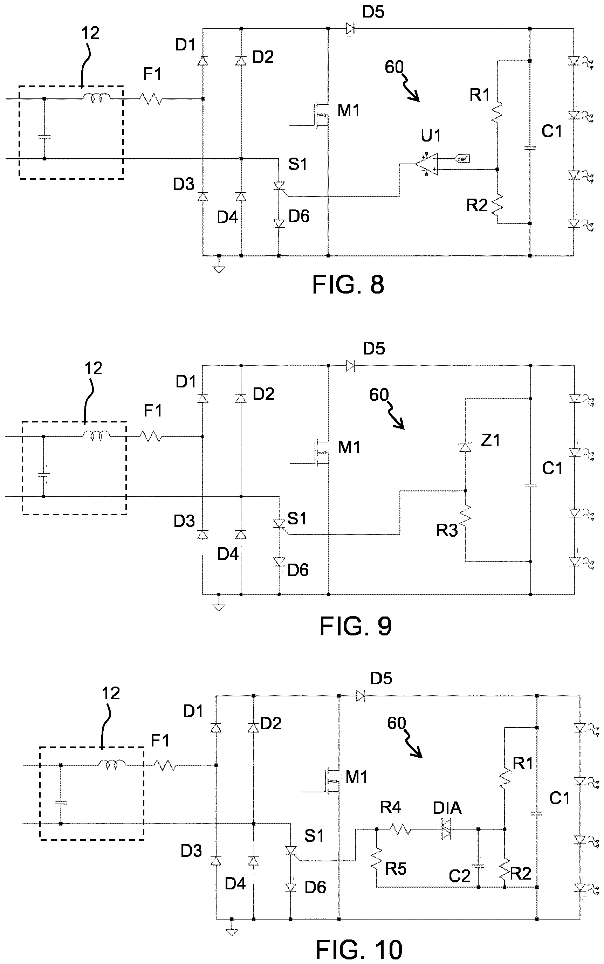

Figures 8 to 10 show three possible designs for the voltage detection circuit 60 as applied to the topology of Figure 7.

Figure 8 shows a resistor divider R1, R2 connected in parallel with the capacitor C1, which derives a voltage which is compared with a reference by a comparator U1.

Figure 9 shows series connection of a Zener diode Z1 and a resistor R3 in parallel with the capacitor C1, with the Zener diode Z1 at the high voltage side and the resistor R3 connected to the cathode of LED string. This directly generates the current for the gate terminal of the SCR.

Figure 10 shows a resistor divider R1, R2 connected in parallel with the capacitor C1, together with a further discrete component circuit which basically implements the function of the comparator U1 of Figure 8. The discrete component circuit comprises a storage capacitor C2, a DIAC DIA and an output resistor divider R4, R5.

It can be seen that may different voltage detection circuits are possible.

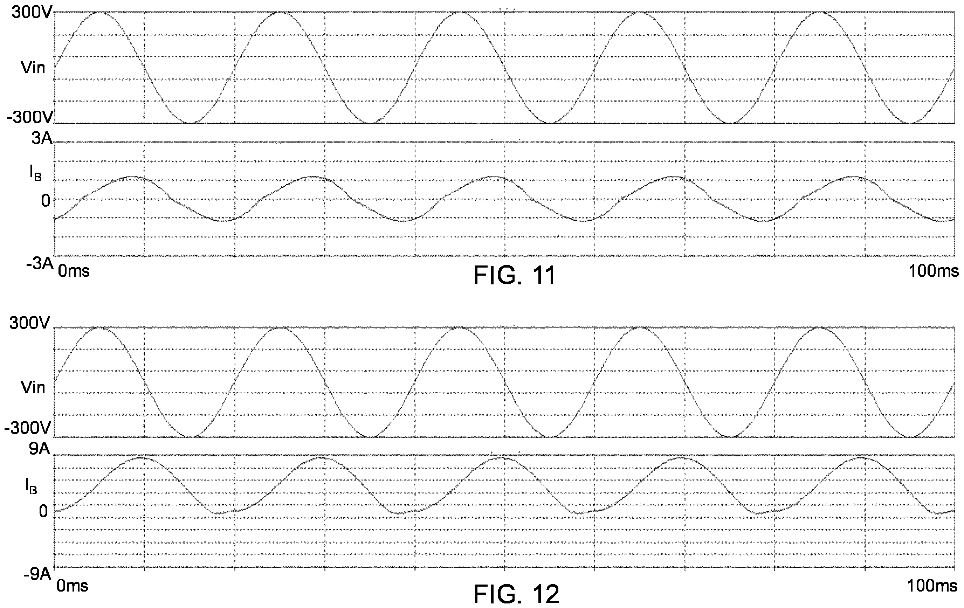

Figure 11 shows the input voltage Vin across the input terminals as the top plot and the current I_{B} delivered by the ballast as the bottom plot, before the need for the protection. The ballast output current before the protection is symmetrical so that the negative peak current is the same as the positive peak current. The peak current is approximately +/-1A.

Figure 12 shows the input voltage across the input terminals as the top plot and the current delivered by the ballast as the bottom plot, when the ballast current has become high asymmetrical. Figure 12 shows times when the protection function is about to be implemented, and shows some time after implementation of the protection. The ballast output current is asymmetrical so that the negative peak current is almost zero, but the positive peak current is as high as almost 9A. This electromagnetic ballast enters into saturation, and the fuse is designed to be activated/blown at 9A current.

The required rated current and voltage of the fuse is dependent on the main circuit, not the protection circuit (e.g. DIAC). The fuse current is typically in the range 1A-10A. The peak off-state voltage of a DIAC (or other protection circuit) is for example 30% higher than the LED string voltage, and not below than surge voltage of the electrolytic buffer capacitor C1. The on-state current of the DIAC (or other protection circuit) of course needs to be below the rated current of the fuse.

The invention may be applied to a reactive electromagnetic ballast, or a constant wattage autotransformer (CWA) ballast.

Two examples have been given above of possible shorting circuits to create the desired asymmetry. Other switching circuits may be used, such as a transistor or transistor-based circuit. Thus, any suitable switch may be used which functions to bypass one of the rectifier diodes.

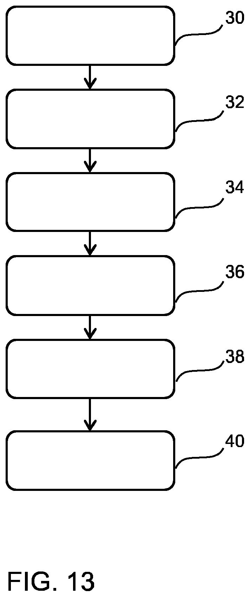

Figure 13 shows an overvoltage protection method for protecting a retrofit lamp when connected to a ballast of a discharge lighting device, the method comprising:
in step 30, receiving AC power from the ballast to input terminals of the retrofit lamp;
in step 32, in the case of a shunt switch driver topology, shunting the input terminals so as to tune the current through a lighting load;
in step 34 detecting a fault, for example by detecting an output voltage provided to the lighting load;
in step 36, activating a protection circuit when the fault is detected, for example when the detected output voltage reaches a threshold;
in step 38, using the protection circuit to create asymmetry, for example by short circuiting the input terminals only in one of the opposing phases of the AC power, thereby to generate a DC component in the AC power from the ballast to make the ballast saturate; and
in step 40, activating a fuse when the saturation current is received from the ballast.

The invention is of interest for shunt switch driver topologies, but it may be applied to other driver architectures such as multi-stage drivers.

The examples above are based on rectifier bridges with passive components, i.e. diodes. The full rectifier may comprise a synchronous (active) bridge wherein active switches i.e. transistors in the bridge achieve the above-mentioned shunt function to tune the LED current. The same active switches are may then also be adapted to form different impedances at opposing phases of the AC power in order to generate a DC component in the ballast output.

The above embodiments describes the invention in an example of overvoltage protection, but those skilled in the art would understand that it can be used for protecting other types of faults. The detailed implementation of detecting those fault could be known, and the above-mentioned way of controlling the conduction of the input terminals differently in opposing phases so as to make the ballast saturate to generate saturate current can be reused.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A retrofit lamp for use with a ballast (12) of a discharge lighting device, comprising:
a pair of input terminals (14, 16) adapted to connect to said ballast to receive AC power from the ballast;
an output stage adapted to be connected to a lighting load and power the lighting load from the AC power;
a fault detection circuit (40;60) to detect a fault,
wherein the retrofit lamp further comprises:
a fuse (F1) in series with one of the input terminals (14,16); and
**characterized in that** the retrofit lamp comprises a protection circuit (40; S1, D6), adapted to be activated by the fault detection circuit and to control an asymmetrical conduction scheme between the pair of input terminals in the opposing phases of the AC power, in order to generate an asymmetrical current in opposing phases thereby generating a DC component in the AC power from the ballast when connected to the input terminals, thereby making the ballast output an excessive ballast current through the fuse to activate and cut off the fuse.

2. A retrofit lamp as claimed in claim 1, further comprising
the lighting load (18), to be driven by said ballast;
wherein the fault detection circuit is adapted to detect an overvoltage at the output stage as the fault, and the protection circuit is adapted to generate the DC component in the AC power from the ballast to make the ballast saturate to output a saturated ballast current as the excessive ballast current to activate and cut off the fuse.

3. A retrofit lamp as claimed in claim 2, wherein the lighting load (18) comprises an LED load.

4. A retrofit lamp as claimed in claim 2 or 3, wherein
the protection circuit is adapted to short circuit the pair of input terminals in only one of the opposing phases of the AC power, while to decouple the pair of input terminals from short circuiting in the other one of the opposing phases; and
the retrofit lamp further comprises a shunt switch (M1) in parallel with said lighting load (18) and adapted to shunt said input terminals so as to tune the current through the lighting load.

5. A retrofit lamp as claimed in any one of claims 1 to 4, comprising a full rectifier (D1-D4) connected to the pair of input terminals, comprising a first branch (D1,D4) for conducting current during a positive phase of the AC power and a second branch (D2,D3) for conducting current during a negative, opposing, phase of the AC power, and wherein the protection circuit (40; S1,D6) is coupled to only one branch of the full rectifier and the other branch is decoupled from the protection circuit.

6. A retrofit lamp as claimed in claim 5, wherein the full rectifier comprises a four-diode diode bridge (D1-D4), wherein the protection circuit comprises a shorting circuit (40; S1,R6) in parallel with one of the diodes of the one branch of the four-diode diode bridge.

7. A retrofit lamp as claimed in any one of claim 5, wherein the full rectifier comprises a active synchronous bridge including diodes and active switches, wherein the protection circuit comprises a shorting circuit (40; S1,R6) in parallel with one of the diodes of the one branch, or the protection circuit comprises the active switch of the one branch.

8. A retrofit lamp as claimed in any one of claims 1 to 7, wherein the protection circuit comprises a DIAC (40) and wherein the DIAC is adapted to also implement the fault detection circuit.

9. A retrofit lamp as claimed in any one of claims 1 to 7, wherein the protection circuit comprises a silicon controlled rectifier (S1) in series with a diode (D6) and the fault detection circuit (60) is coupled to the output stage and separate to the protection circuit.

10. A retrofit lamp as claimed in any one of claims 1 to 9, further comprising a buffer capacitor (C1) as the output stage in parallel with the lighting load, and said fuse is adapted to be cut off thereby protecting the buffer capacitor.

11. A retrofit lamp as claimed in any one of claims 1 to 10, wherein the rating of the fuse (F1) is in the range 1A to 10A.

12. A retrofit lamp as claimed in any one of claims 1 to 11, wherein the fault detection circuit is adapted to activate the protection circuit when an output voltage is higher than an operating voltage of the lighting load by a predetermined margin, wherein the margin is at least 30%.

13. A retrofit lamp as claimed in any one of claims 1 to 12, for use with an electromagnetic ballast (12) for high intensity discharge lamps.

14. A lighting system comprising:
an electromagnetic ballast (12) of a discharge lighting device; and
a retrofit lamp as claimed in any one of claims 1 to 13 connected to the ballast.

15. A protection method for protecting a retrofit lamp when connected to a ballast of a discharge lighting device, the method comprising:
(30) receiving AC power from the ballast to input terminals of the retrofit lamp;
(34) detecting a fault;
(36) activating a protection circuit (40; S1,R6) when the fault is detected;
(38) using the protection circuit to control an asymmetrical conduction scheme between the pair input terminals in the opposing phases of the AC power, thereby to generate an asymmetrical current in opposing phases thereby generating a DC component in the AC power from the ballast when connected to the input terminals, to make the ballast saturate; and
(40) activating and cutting off a fuse (F1) when the saturation current is received from the ballast.

## Patentansprüche

1. Retrofit-Lampe zur Verwendung mit einem Vorschaltgerät (12) einer Entladungsbeleuchtungsvorrichtung, umfassend:
ein Paar Eingangsanschlüsse (14, 16), die dazu angepasst sind, mit dem Vorschaltgerät verbunden zu werden, um AC-Leistung von dem Vorschaltgerät zu empfangen;
eine Ausgangsstufe, die dazu angepasst ist, mit einer Beleuchtungslast verbunden zu werden und die Beleuchtungslast aus der AC-Leistung versorgt;
eine Fehlererkennungsschaltung (40; 60) zum Erkennen eines Fehlers,
wobei die Retrofit-Lampe ferner umfasst:
eine Sicherung (F1) in Reihe mit einem der Eingangsanschlüsse (14, 16); und
**dadurch gekennzeichnet, dass** die Retrofit-Lampe eine Schutzschaltung (40; S1, D6) umfasst, die dazu angepasst ist, durch die Fehlererkennungsschaltung aktiviert zu werden und ein asymmetrisches Leitungsschema zwischen dem Paar Eingangsanschlüsse in den entgegengesetzten Phasen der AC-Leistung zu steuern, um einen asymmetrischen Strom in entgegengesetzten Phasen zu erzeugen, wodurch eine DC-Komponente in der AC-Leistung von dem Vorschaltgerät erzeugt wird, wenn es mit den Eingangsanschlüssen verbunden ist, wodurch das Vorschaltgerät veranlasst wird, einen übermäßigen Vorschaltgerätestrom durch die Sicherung auszugeben, um die Sicherung zu aktivieren und auszuschalten.

2. Retrofit-Lampe nach Anspruch 1, ferner umfassend
die Beleuchtungslast (18), die durch das Vorschaltgerät angetrieben wird;
wobei die Fehlererkennungsschaltung dazu angepasst ist, eine Überspannung an der Ausgangsstufe als Fehler zu erkennen, und die Schutzschaltung dazu angepasst ist, die DC-Komponente in der AC-Leistung von dem Vorschaltgerät zu erzeugen, um das Vorschaltgerät in Sättigung zu bringen, um einen gesättigten Vorschaltgerätestrom als den übermäßigen Vorschaltgerätestrom auszugeben, um die Sicherung zu aktivieren und auszuschalten.

3. Retrofit-Lampe nach Anspruch 2, wobei die Beleuchtungslast (18) eine LED-Last umfasst.

4. Retrofit-Lampe nach Anspruch 2 oder 3, wobei
die Schutzschaltung dazu angepasst ist, das Paar Eingangsanschlüsse in nur einer der entgegengesetzten Phasen der AC-Leistung kurzzuschließen, während sie das Paar Eingangsanschlüsse von dem Kurzschließen in der anderen der entgegengesetzten Phasen entkoppelt; und
die Retrofit-Lampe ferner einen Shunt-Schalter (M1) umfasst, der parallel zu der Beleuchtungslast (18) und dazu angepasst ist, die Eingangsanschlüsse so zu shunten, dass der Strom durch die Beleuchtungslast abgestimmt wird.

5. Retrofit-Lampe nach einem der Ansprüche 1 bis 4, umfassend einen Vollgleichrichter (D1 bis D4), der mit dem Paar Eingangsanschlüsse verbunden ist, umfassend einen ersten Zweig (D1, D4) zum Leiten von Strom während einer positiven Phase der AC-Leistung und einen zweiten Zweig (D2, D3) zum Leiten von Strom während einer negativen, entgegengesetzten Phase der AC-Leistung, und wobei die Schutzschaltung (40; S1, D6) mit nur einem Zweig des Vollgleichrichters gekoppelt ist und der andere Zweig von der Schutzschaltung entkoppelt ist.

6. Retrofit-Lampe nach Anspruch 5, wobei der Vollgleichrichter eine Vierdioden-Diodenbrücke (D1 bis D4) umfasst, wobei die Schutzschaltung eine Kurzschlussschaltung (40; S1, R6) parallel zu einer der Dioden des einen Zweigs der Vierdioden-Diodenbrücke umfasst.

7. Retrofit-Lampe nach einem der Ansprüche 5, wobei der Vollgleichrichter eine aktive Synchronbrücke einschließlich Dioden und aktiven Schaltern umfasst, wobei die Schutzschaltung eine Kurzschlussschaltung (40; S1, R6) parallel zu einer der Dioden des einen Zweigs umfasst, oder die Schutzschaltung den aktiven Schalter des einen Zweigs umfasst.

8. Retrofit-Lampe nach einem der Ansprüche 1 bis 7, wobei die Schutzschaltung einen DIAC (40) umfasst und wobei der DIAC dazu angepasst ist, auch die Fehlererkennungsschaltung zu implementieren.

9. Retrofit-Lampe nach einem der Ansprüche 1 bis 7, wobei die Schutzschaltung einen siliziumgesteuerten Gleichrichter (S1) in Reihe mit einer Diode (D6) umfasst und die Fehlererkennungsschaltung (60) mit der Ausgangsstufe gekoppelt ist und von der Schutzschaltung getrennt ist.

10. Retrofit-Lampe nach einem der Ansprüche 1 bis 9, ferner umfassend einen Pufferkondensator (C1) als Ausgangsstufe parallel zu der Beleuchtungslast, und die Sicherung ist dazu angepasst, abgeschaltet werden zu können, um dadurch den Pufferkondensator zu schützen.

11. Retrofit-Lampe nach einem der Ansprüche 1 bis 10, wobei der Nennwert der Sicherung (F1) in dem Bereich 1 A bis 10 A liegt.

12. Retrofit-Lampe nach einem der Ansprüche 1 bis 11, wobei die Fehlererkennungsschaltung dazu ausgelegt ist, die Schutzschaltung zu aktivieren, wenn eine Ausgangsspannung um eine vorbestimmte Spanne höher ist als eine Betriebsspannung der Beleuchtungslast, wobei die Spanne mindestens 30 % beträgt.

13. Retrofit-Lampe nach einem der Ansprüche 1 bis 12 zur Verwendung mit einem elektromagnetischen Vorschaltgerät (12) für Hochdruckentladungslampen.

14. Beleuchtungssystem, umfassend:
ein elektromagnetisches Vorschaltgerät (12) einer Entladungsbeleuchtungsvorrichtung; und
eine Retrofit-Lampe nach einem der Ansprüche 1 bis 13, die mit dem Vorschaltgerät verbunden ist.

15. Schutzverfahren zum Schützen einer Retrofit-Lampe, wenn sie mit einem Vorschaltgerät einer Entladungsbeleuchtungsvorrichtung verbunden ist, wobei das Verfahren umfasst:
(30) Empfangen von AC-Leistung von dem Vorschaltgerät an Eingangsanschlüssen der Retrofit-Lampe;
(34) Erkennen eines Fehlers;
(36) Aktivieren einer Schutzschaltung (40; S1, R6), wenn der Fehler erkannt wird;
(38) Verwenden der Schutzschaltung zum Steuern eines asymmetrischen Leitungsschemas zwischen dem Paar Eingangsanschlüsse in den entgegengesetzten Phasen der AC-Leistung, um dadurch einen asymmetrischen Strom in entgegengesetzten Phasen zu erzeugen, wodurch eine DC-Komponente in der AC-Leistung von dem Vorschaltgerät erzeugt wird, wenn es mit den Eingangsanschlüssen verbunden ist, um das Vorschaltgerät in die Sättigung zu bringen; und
(40) Aktivieren und Abschalten einer Sicherung (F1), wenn der Sättigungsstrom von dem Vorschaltgerät empfangen wird.

## Revendications

1. Lampe de conversion rétroactive pour utilisation avec un ballast (12) d'un dispositif d'éclairage à décharge, comprenant :
une paire de bornes d'entrée (14, 16) conçues pour se connecter audit ballast pour recevoir une alimentation CA provenant du ballast ;
un étage de sortie conçu pour être connecté à une charge d'éclairage et alimenter la charge d'éclairage à partir de l'alimentation CA ;
un circuit de détection de défaut (40 ;60) pour détecter un défaut,
dans laquelle la lampe de conversion rétroactive comprend en outre :
un fusible (F1) en série avec une des bornes d'entrée (14,16) ; et
**caractérisée en ce que** la lampe de conversion rétroactive comprend un circuit de protection (40 ; S1 ,D6), conçu pour être activé par le circuit de détection de défaut et pour commander un schéma de conduction asymétrique entre la paire de bornes d'entrée dans les phases opposées de l'alimentation CA, afin de générer un courant asymétrique dans des phases opposées générant de ce fait une composante CC dans l'alimentation CA provenant du ballast lorsqu'elle est connectée aux bornes d'entrée, ce qui fait en sorte que le ballast délivre en sortie un courant excessif de ballast à travers le fusible pour activer et couper le fusible.

2. Lampe de conversion rétroactive selon la revendication 1, comprenant en outre
la charge d'éclairage (18), destinée à être pilotée par ledit ballast ;
dans laquelle le circuit de détection de défaut est conçu pour détecter une surtension au niveau de l'étage de sortie en guise de défaut, et le circuit de protection est conçu pour générer la composante CC dans l'alimentation CA provenant du ballast pour rendre le ballast saturé pour délivrer en sortie un courant de ballast saturé comme courant excessif de ballast pour activer et couper le fusible.

3. Lampe de conversion rétroactive selon la revendication 2, dans laquelle la charge d'éclairage (18) comprend une charge de DEL.

4. Lampe de conversion rétroactive selon la revendication 2 ou 3, dans laquelle
le circuit de protection est conçu pour court-circuiter la paire de bornes d'entrée dans une seule des phases opposées de l'alimentation CA, tout en découplant la paire de bornes d'entrée d'un court-circuitage dans l'autre des phases opposées ; et
la lampe de conversion rétroactive comprend en outre un commutateur de dérivation (M1) en parallèle avec ladite charge d'éclairage (18) et conçu pour dériver lesdites bornes d'entrée de façon à ajuster le courant à travers la charge d'éclairage.

5. Lampe de conversion rétroactive telle que revendiquée dans l'une quelconque des revendications 1 à 4, comprenant un redresseur complet (D1-D4) connecté à la paire de bornes d'entrée, comprenant une première branche (D1,D4) pour conduire le courant pendant une phase positive de l'alimentation CA et une deuxième branche (D2,D3) pour conduire le courant pendant une phase négative, opposée, de l'alimentation CA, et dans laquelle le circuit de protection (40 ; S1,D6) est couplé à une seule branche du redresseur complet et l'autre branche est découplée du circuit de protection.

6. Lampe de conversion rétroactive selon la revendication 5, dans laquelle le redresseur complet comprend un pont à diodes à quatre diodes (D1-D4), dans laquelle le circuit de protection comprend un circuit de court-circuitage (40 ; S1,R6) en parallèle avec l'une des diodes de la branche précitée du pont à diodes à quatre diodes.

7. Lampe de conversion rétroactive selon l'une quelconque de la revendication 5, dans laquelle le redresseur complet comprend un pont synchrone actif incluant des diodes et des commutateurs actifs, dans laquelle le circuit de protection comprend un circuit de court-circuitage (40 ; S1,R6) en parallèle avec l'une des diodes de la branche précitée, ou le circuit de protection comprend le commutateur actif de la branche précitée.

8. Lampe de conversion rétroactive selon l'une quelconque des revendications 1 à 7, dans laquelle le circuit de protection comprend un DIAC (40) et dans laquelle le DIAC est conçu pour implémenter également le circuit de détection de défaut.

9. Lampe de conversion rétroactive selon l'une quelconque des revendications 1 à 7, dans laquelle le circuit de protection comprend un redresseur commandé au silicium (S1) en série avec une diode (D6) et le circuit de détection de défaut (60) est couplé à l'étage de sortie et séparé du circuit de protection.

10. Lampe de conversion rétroactive selon l'une quelconque des revendications 1 à 9, comprenant en outre un condensateur tampon (C1) en guise d'étage de sortie en parallèle avec la charge d'éclairage, et ledit fusible est conçu pour être coupé protégeant de ce fait le condensateur tampon.

11. Lampe de conversion rétroactive selon l'une quelconque des revendications 1 à 10, dans laquelle la spécification du fusible (F1) est dans la plage 1A à 10A.

12. Lampe de conversion rétroactive selon l'une quelconque des revendications 1 à 11, dans laquelle le circuit de détection de défaut est conçu pour activer le circuit de protection lorsqu'une tension de sortie est supérieure à une tension de fonctionnement de la charge d'éclairage selon une marge prédéterminée, la marge étant d'au moins 30 %.

13. Lampe de conversion rétroactive selon l'une quelconque des revendications 1 à 12, pour utilisation avec un ballast électromagnétique (12) pour des lampes à décharge à haute intensité.

14. Système d'éclairage comprenant :
un ballast électromagnétique (12) d'un dispositif d'éclairage à décharge ; et
une lampe de conversion rétroactive selon l'une quelconque des revendications 1 à 13 connectée au ballast.

15. Procédé de protection pour protéger une lampe de conversion rétroactive lorsqu'elle est connectée à un ballast d'un dispositif d'éclairage à décharge, le procédé comprenant :
(30) la réception d'une alimentation CA provenant du ballast à des bornes d'entrée de la lampe de conversion rétroactive ;
(34) la détection d'un défaut ;
(36) l'activation d'un circuit de protection (40 ; S1,R6) lorsque le défaut est détecté ;
(38) l'utilisation du circuit de protection pour commander un schéma de conduction asymétrique entre la paire de bornes d'entrée dans les phases opposées de l'alimentation CA, pour générer de ce fait un courant asymétrique dans des phases opposées générant de ce fait une composante CC dans l'alimentation CA provenant du ballast lorsqu'elle est connectée aux bornes d'entrée, pour rendre le ballast saturé ; et
(40) l'activation et la coupure d'un fusible (F1) lorsque le courant de saturation est reçu du ballast.
